# EUROPEAN PATENT APPLICATION

(11) **EP 3 386 076 A1**
(43) Date of publication of application: **10.10.2018**
(21) Application number: 16888124.1
(22) Date of filing: 21.11.2016
(51) Int. Cl.: H02K 5/22, H02K 5/08

(54) **MOTOR**

(30) Priority: 27.01.2016 JP 2016013671; 27.09.2016 JP 2016188579
(71) Applicant: Daikin Industries, Ltd., Osaka-shi, Osaka 530-8323 (JP)
(72) Inventor: TAKAYAMA, Yoshinori, (JP)
(74) Representative: Goddar, Heinz J.
(86) International application number: PCT/JP2016/084468
(87) International publication number: WO 2017/130539

(57) **Abstract**

This motor is provided with: a stator (10) provided with a stator core (11), and a coil (13) which is wound around the stator core (11) with an insulator (12) therebetween; a moulded resin part (20) which covers the stator (10); a printed substrate (30) which is disposed inside the moulded resin part (20); and a lead bush (40) for leading, out to the exterior, a lead wire (31) having one end connected to the printed substrate (30). The lead bush (40) is disposed so as to be offset in the axial direction with respect to the printed substrate (30). As a result, provided is a motor which is capable of inhibiting malfunctions caused by water ingress.

## Description

### TECHNICAL FIELD

The present invention relates to motors.

### BACKGROUND ART

Conventionally, there is a motor that drives a fan for an indoor unit of an air conditioner (see, for example, Japanese Unexamined Patent Application Publication No. 2015-154645 (Patent Literature 1)).

In the motor, a stator including a stator core and coils wound around the stator core with an insulator interposed between the coils and the stator core is covered with a mold resin. In such a motor including a stator covered with a mold resin, a printed circuit board for connecting coils of the stator is covered with the mold resin together with the stator. Wiring lines connected to the printed circuit board are bundled and drawn out from an inner side of the mold resin to an outer side of the mold resin through a lead bush.

In the motor, applying a hydrophobic liquid to the interface between the lead bush and the mold resin and to the interface between the mold resin and a lead wire prevents water from infiltrating into gaps at the respective interfaces in an environment where dew condensation easily occurs in the motor and in an environment in which the motor is easily exposed to water.

### CITATIONS LIST

### PATENT LITERATURE

Patent Literature 1: Japanese Unexamined Patent Application Publication No. 2015-154645

### SUMMARY OF INVENTION

### TECHNICAL PROBLEMS

However, with the above conventional motor, there still remains a problem that water infiltrates particularly in an environment of high humidity and low temperature due to the quality of the application work of the hydrophobic liquid and the aged deterioration of the liquid.

When water infiltrates through the interface between the lead bush and the mold resin and the interface between the mold resin and the lead wire, in the printed circuit board which connects coils of the molded stator, the circuit short-circuits and breaks, or the insulating properties of the circuit are deteriorated and the reliability is lowered.

Thus, an object of the present invention is to provide a motor capable of preventing malfunctions due to water infiltration.

### SOLUTIONS TO PROBLEMS

In order to solve the problem, a motor of the present invention comprises:
a stator including a stator core and coils wound around the stator core with an insulator interposed between the coil and the stator core;
a mold resin portion configured to cover the stator (10) ;
a printed circuit board arranged within the mold resin portion; and
a lead bush configured to bundle wiring lines one end of which is connected to the printed circuit board (30, 430) to draw the wiring lines outside,
wherein the lead bush is arranged to be displaced in any one of opposite axial directions of the motor with respect to the printed circuit board.

According to the above configuration, arranging the lead bush to be displaced in any one of the axial directions with respect to the printed circuit board arranged within the mold resin portion allows the distance of the wiring lines from the printed circuit board to the lead bush within the mold resin portion to be lengthened. Thus, even when water infiltrates into the interface between the lead bush and the mold resin and the interface between the mold resin and the wiring lines within the mold resin portion, an infiltration path from the lead bush to the printed circuit board is lengthened, so that the infiltration of water is suppressed, and the probability that a malfunction such as a short circuit occurs in the printed circuit board for connecting the coils of the stator can be reduced. Therefore, malfunctions due to water infiltration can be prevented and high reliability can be obtained for a long period of time.

A motor of one embodiment comprises:
a cylindrical rotor arranged so as to surround a radially outer side of the stator;
a rotor attachment portion provided at one end of the rotor; and
a support portion configured to rotatably support the rotor via the rotor attachment portion, wherein the printed circuit board is arranged on the rotor attachment portion side of the stator core, and
the lead bush is arranged on a side opposite to the rotor attachment portion side of the stator core.

According to the above embodiments, arranging the printed circuit board on the rotor attachment portion side of the stator core and arranging the lead bush on the side opposite to the rotor attachment portion side of the stator core allows the distance of the wiring lines from the printed circuit board to the lead bush within the mold resin portion is further lengthened across the stator core, and the probability of occurrence of malfunctions due to water infiltration can be greatly reduced.

In a motor of one embodiment, the lead bush is arranged to be displaced downward in the axial direction with respect to a plane along the printed circuit board.

According to the above embodiments, arranging the lead bush to be displaced downward in the axial direction with respect to the plane along the printed circuit board causes the lead bush side of the infiltration path from the lead bush to the printed circuit board within the mold resin portion to turn upward, and water to hardly infiltrate into the interface between the lead bush and the mold resin and the interface between the mold resin and the wiring lines, so that malfunctions due to water infiltration can be reliably prevented.

In a motor of one embodiment, the lead bush is arranged to be displaced in a circumferential direction with respect to a connection portion of the printed circuit board to which the wiring lines are connected.

According to the above embodiments, arranging the lead bush to be displaced in the circumferential direction with respect to the connection portion of the printed circuit board to which the wiring lines are connected causes the infiltration path from the lead bush to the printed circuit board within the mold resin portion to be lengthened, and water hardly infiltrate into the interface between the lead bush and the mold resin and the interface between the mold resin and the wiring lines, so that malfunctions due to water infiltration can be reliably prevented.

### ADVANTAGEOUS EFFECTS OF INVENTION

As is clear from the above, according to the present invention, it is possible to provide a motor that can prevent the malfunctions due to water infiltration by lengthening the infiltration path from the lead bush to the printed circuit board within the mold resin portion.

### BRIEF DESCRIPTION OF DRAWINGS

Fig. 1 is a perspective view of a longitudinal section of a motor according to a first embodiment of the present invention.
Fig. 2 is a longitudinal sectional view of a stator side of the motor.
Fig. 3 is a top view of the stator side of the motor.
Fig. 4 is a longitudinal sectional view of the stator, a printed circuit board, and a lead bush.
Fig. 5 is a longitudinal sectional view of an upper metal mold for a mold resin portion with which the stator, the printed circuit board, and the lead bush are to be covered.
Fig. 6 is a longitudinal sectional view of a lower metal mold for the mold resin portion with which the stator, the printed circuit board, and the lead bush are to be covered.
Fig. 7 is a longitudinal sectional view showing a manufacturing process step for describing a method for manufacturing a motor according to a second embodiment of the present invention.
Fig. 8 is a longitudinal sectional view showing a manufacturing process step subsequent to Fig. 7.
Fig. 9 is a longitudinal sectional view showing a manufacturing process step subsequent to Fig. 8.
Fig. 10 is a longitudinal sectional view of a motor according to a fourth embodiment of the present invention.
Fig. 11 is a top view of a stator side of the motor.

### DESCRIPTION OF EMBODIMENTS

In the following, embodiments of a motor of the present invention will be described in detail with reference to the drawings. It should be noted that in the drawings, the same reference numbers denote the same parts or corresponding parts. In addition, the dimensions on the drawings such as the length, the width, the thickness, and the depth have been appropriately changed from the actual scale for clarification and simplification of the drawing, and do not represent actual relative dimensions.

### [First Embodiment]

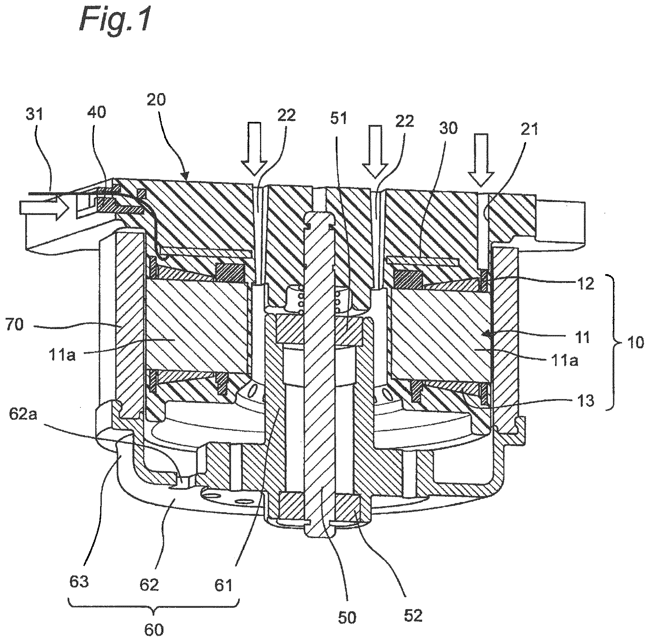

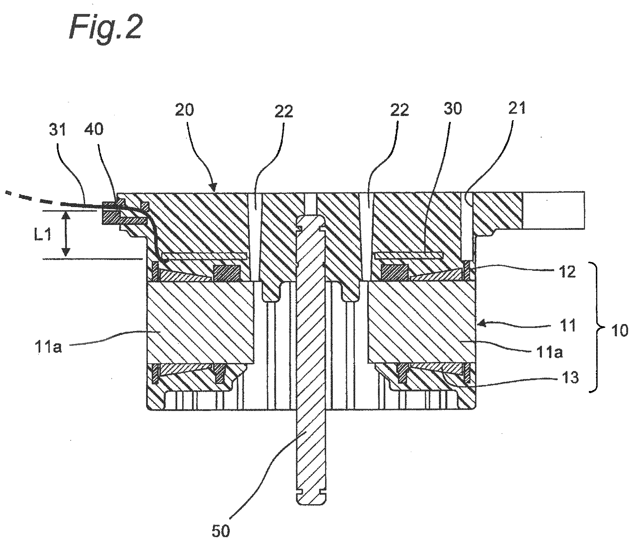

Fig. 1 shows a perspective view of a longitudinal section of a motor according to a first embodiment of the present invention, and Fig. 2 shows a longitudinal sectional view of a stator 10 side of the motor. The motor according to the first embodiment is an outer rotor type motor.

As shown in Fig. 1, the motor according to the first embodiment includes the stator 10, a mold resin portion 20, a printed circuit board 30, a lead bush 40, a shaft portion 50, a rotor attachment portion 60, and a rotor 70.

The stator 10 includes a stator core 11, insulators 12, and coils 13 wound around the stator core 11 with the insulators 12 interposed between the coils 13 and the stator core 11. The stator core 11 is formed of a laminated steel plate made of a soft magnetic material having electrical conductivity. The stator core 11 includes a plurality of teeth 11a. The insulators 12 are formed of an insulating resin material and insulate the coils 13 from the teeth 11a of the stator core 11. The coils 13 are wound around the teeth 11a of the stator core 11 using a winding shaft extending along a radial direction of the motor.

It should be noted that in the present specification, unless otherwise noted, the term coil does not refer to a conductive wire constituting the coil but refers to a mode in which the conductive wire is wound. This also applies to the drawings.

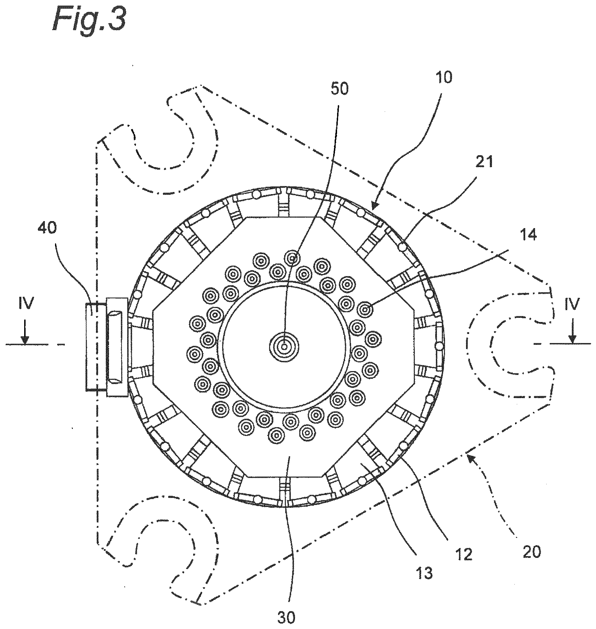

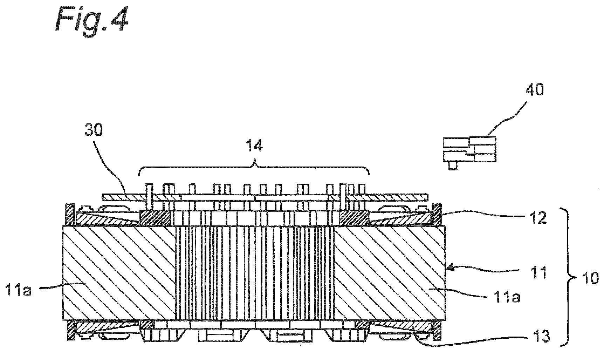

The printed circuit board 30 is arranged above the stator 10 inside the mold resin portion 20 so as to be orthogonal to an axial direction of the motor. The printed circuit board 30 is arranged radially inside of insulator holding pin holes 21 (only one is shown in Fig. 2) in the radial direction of the stator 10. Lead-out wires 14 (shown in Figs. 3 and 4) at the start and end of winding of the coil 13 are connected to the printed circuit board 30. In addition, a lead 31, one end of which is connected to the printed circuit board 30, is drawn out to an outer side of the mold resin portion 20 via the lead bush 40. The lead 31 is a bundle of wiring lines connected to the printed circuit board 30.

The mold resin portion 20 covers the stator 10, the printed circuit board 30, a part of the lead 31, a part of the lead bush 40, and an upper portion of the shaft portion 50 with a mold resin. As a material of the mold resin portion 20, for example, BMC (Bulk-Molding Compound: unsaturated polyester) is available.

In addition, the mold resin portion 20 includes the insulator holding pin holes 21 extending upward from an outer peripheral edge portion ofone of the insulators 12. The mold resin portion 20 includes vent holes 22 arranged at intervals circumferentially around the shaft portion 50. The plurality of vent holes 22 vertically penetrate the mold resin portion 20.

Bearings 51 and 52 are attached to the shaft portion 50, whose upper portion is fixed to the mold resin portion 20, at an axial interval. A bearing housing 61 is rotatably attached to the shaft portion 50 via the bearings 51 and 52. A flange 62 is provided on an underside of the bearing housing 61. A cylindrical portion 63 extends upward from an outer peripheral side of the flange 62. The bearing housing 61, the flange 62, and the cylindrical portion 63 constitute the rotor attachment portion 60. The flange 62 is provided with vent holes 62a at intervals circumferentially around the shaft portion 50. The rotor attachment portion 60 is a molded member formed by aluminum die casting.

The cylindrical rotor 70 is attached to an upper end of the cylindrical portion 63 of the rotor attachment portion 60 so as to surround an outer periphery of the stator 10. The rotor 70 has a ferrite bonded magnet. The rotor 70 is arranged so as to surround a radial outside of the stator 10, and an inner peripheral surface of the rotor 70 faces an outer peripheral surface of the stator core 11 across an air gap. The shaft portion 50 and the bearings 51 and 52 constitute a support portion for rotatably supporting the rotor 70 via the rotor attachment portion 60.

It should be noted that in this embodiment, the rotor 70 having a ferrite bonded magnet is used, but the rotor may have a magnetic pole member or the like formed with a permanent magnet other than the ferrite bonded magnet.

In these stator 10 and rotor 70, applying an appropriate AC voltage to each coil 13 generates a rotating magnetic field from the stator 10 to rotate the rotor 70.

In Fig. 2, the lead bush 40 is arranged to be displaced by a distance L1 upward in the axial direction with respect to a plane along the printed circuit board 30.

With the motor having the above configuration, arranging the lead bush 40 displaced in the axial direction with respect to the plane along the printed circuit board 30 allows a distance of the lead 31 from the printed circuit board 30 to the lead bush 40 within the mold resin portion 20 to be lengthened. Thus, even when water infiltrates into the interface between the lead bush 40 and the mold resin and the interface between the mold resin and the lead 31 in the mold resin portion 20, the infiltration path from the lead bush 40 to the printed circuit board 30 is lengthened, so that the infiltration of water is suppressed, and the probability that a malfunction such as a short circuit occurs in the printed circuit board 30 connected with the coils 13 of the stator 10 can be reduced. Therefore, malfunctions due to water infiltration can be prevented and high reliability can be obtained for a long period of time.

It should be noted that in this embodiment, the lead bush 40 is arranged to be displaced by the distance L1 upward in the axial direction with respect to the plane along the printed circuit board 30, but the lead bush may be arranged to be displaced downward in the axial direction with respect to the plane along the printed circuit board. In this case, the lead bush side of the infiltration path from the lead bush to the printed circuit board within a mold resin portion turns upward, and water hardly infiltrates into the interface between the lead bush and the mold resin and the interface between the mold resin and wiring lines, so that malfunctions due to water infiltration can be reliably prevented.

Fig. 3 shows a top view on the stator 10 side of the motor. In Fig. 3, the same components as those in Figs. 1 and 2 are denoted by the same reference numbers. In Fig. 3, the mold resin portion 20 is indicated by an alternate long and short dashed line except for the portion surrounding the shaft portion 50 and the insulator holding pin holes 21.

As shown in Fig. 3, each of the insulator holding pin holes 21 is arranged on the outer peripheral edge portion of the insulator 12.Each of the insulator holding pin holes 21 is arranged radially outward of a corresponding one of the coils 13. In addition, the lead-out wires 14 at the start and end of winding The lead-out wires 14 are connected to the polygonal printed circuit board 30.

The mold resin portion 20 includes an annular region in which the insulator holding pin holes 21 are arranged. The mold resin portion 20 includes a region, which is surrounded by the annular region and in which no holding pin holes are arranged, on the printed circuit board 30.

Fig. 4 shows a longitudinal sectional view of the stator 10, the printed circuit board 30, and the lead bush 40, and is a longitudinal sectional view taken along line IV-IV in Fig. 3 (except for the mold resin portion 20). In Fig. 4, the same components as those in Figs. 1 and 2 are denoted by the same reference numbers.

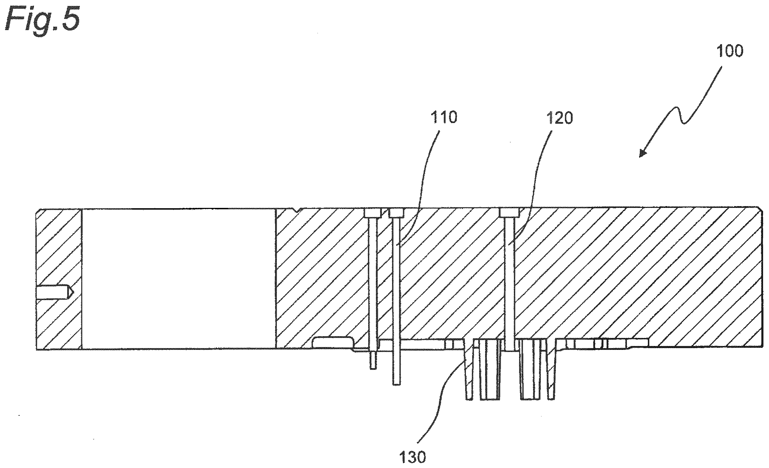

Next, Fig. 5 shows a longitudinal sectional view of an upper metal mold 100 used for resin molding for covering the stator 10, the printed circuit board 30, and the lead bush 40 with the mold resin portion 20.

As shown in Fig. 5, insulator holding pins 110 whose tips protrude downward (only one is shown in Fig. 5), and a shaft portion holding pin 120 whose tip protrudes downward are attached to the upper metal mold 100. In addition, the upper metal mold 100 is provided with six vent hole protrusions 130 which are arranged around the shaft portion holding pin 120 of the upper metal mold 100 in a circumferential direction of the upper metal mold 100. The vent hole protrusions 130 have tips protruding downward.

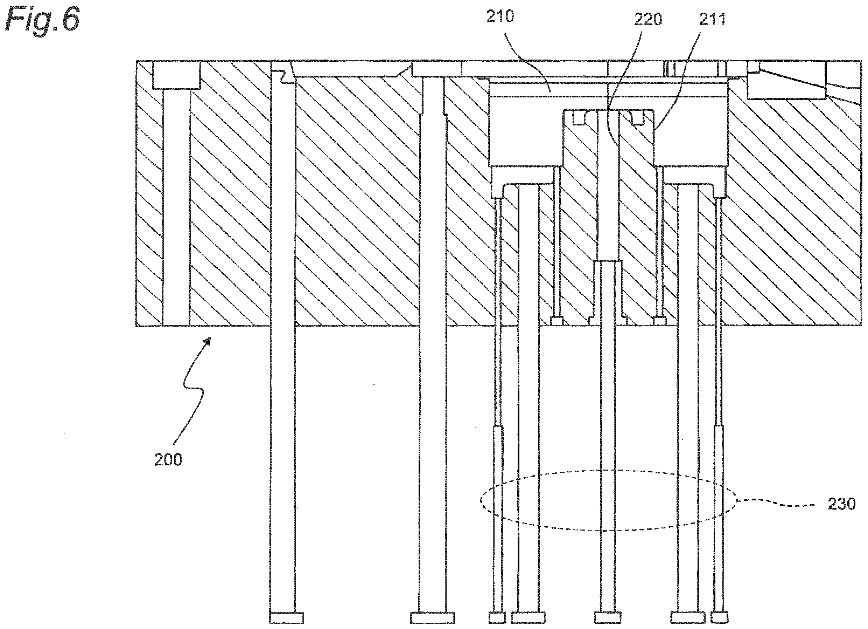

Fig. 6 shows a longitudinal sectional view of a lower metal mold 200 used for resin molding for covering the stator 10, the printed circuit board 30, and the lead bush 40 with the mold resin portion 20. In Fig. 6, the reference number 230 denotes an ejector pin.

As shown in Fig. 6, the lower metal mold 200 is provided with a cavity 210 in which the stator 10 and the printed circuit board 30 are accommodated and in which the mold resin portion 20 (shown in Fig. 1) is molded.

In addition, the lower metal mold 200 is provided with a cylindrical portion 211 protruding upward from the center of a bottom of the cavity 210 of the lower metal mold 200. The center of the cylindrical portion 211 is provided with an insertion hole 220 into which the shaft portion 50 is inserted.

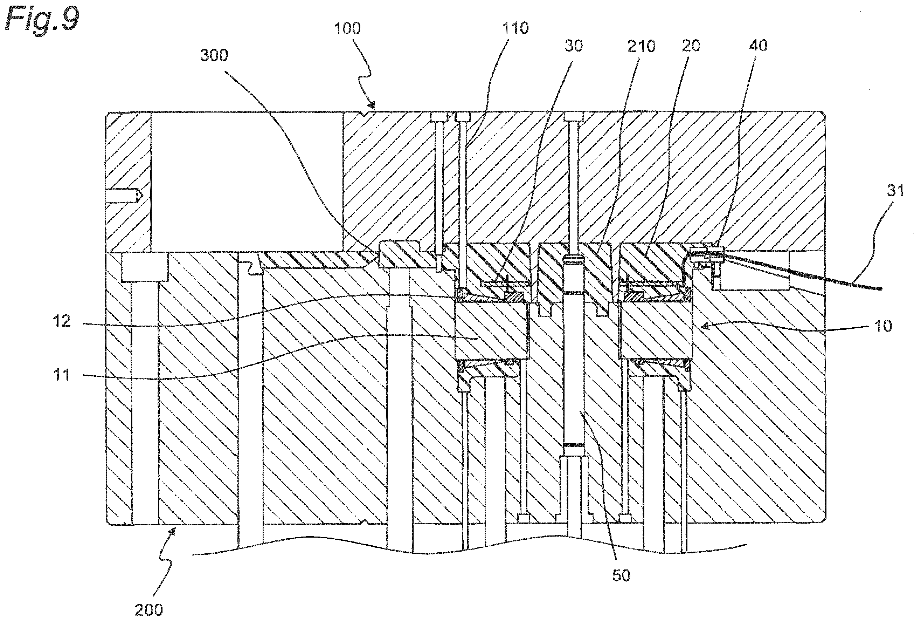

The upper metal mold 100 and the lower metal mold 200 are examples of metal molds. By using these metal molds, a motor is manufactured as in the following second embodiment. In a state where the stator 10 is accommodated in the cavity 210 of the lower metal mold 200 and where the insulator 12 is pressed by the insulator holding pins 110, a mold resin is injected into the metal molds (100 and 200) from a resin injection port 300 (shown in Fig. 9) above the printed circuit board 30. At this resin injection port 300, a resin injection port trace is formed on a side opposite to the coils 13 side of printed circuit board 30 (an opposite side of the coils 13 with respect to the printed circuit board 30) in the mold resin portion 20.

Since there is no holding pin hole on the printed circuit board 30 in the mold resin portion 20, there is no water infiltration through such a holding pin hole, malfunctions due to water infiltration can be prevented, and high reliability can be obtained for a long time.

In addition, the mold resin portion 20 includes a resin injection port trace on the side opposite to the coils 13 side of printed circuit board 30, and during resin molding, a mold resin is injected from the side opposite to the coils 13 side of printed circuit board 30. Therefore, instead of pressing the printed circuit board 30 with holding pins during resin molding as in the conventional case, the pressure of the injected mold resin presses the printed circuit board 30 to perform resin molding, and holding pins for pressing the printed circuit board 30 becomes unnecessary. That is, it is easy to prevent holding pin holes from being formed on the printed circuit board 30 in the mold resin portion 20.

### [Second Embodiment]

Next, a method for manufacturing a motor according to the second embodiment of the present invention will be described. The motor manufactured by the method for manufacturing the motor according to the second embodiment is the motor of the first embodiment.

First, the stator 10 including the stator core 11 and the coils 13 wound around the stator core 11 with the insulators 12 interposed between the coils 13 and the stator core 11 shown in Fig. 4 is assembled.

Next, the printed circuit board 30 for connecting the coils 13 is attached to the assembled stator 10. At this time, the lead-out wires 14 of the coils 13 are connected toa connection portion. A circuit formed on the printed circuit board 30 includes the connection portion.

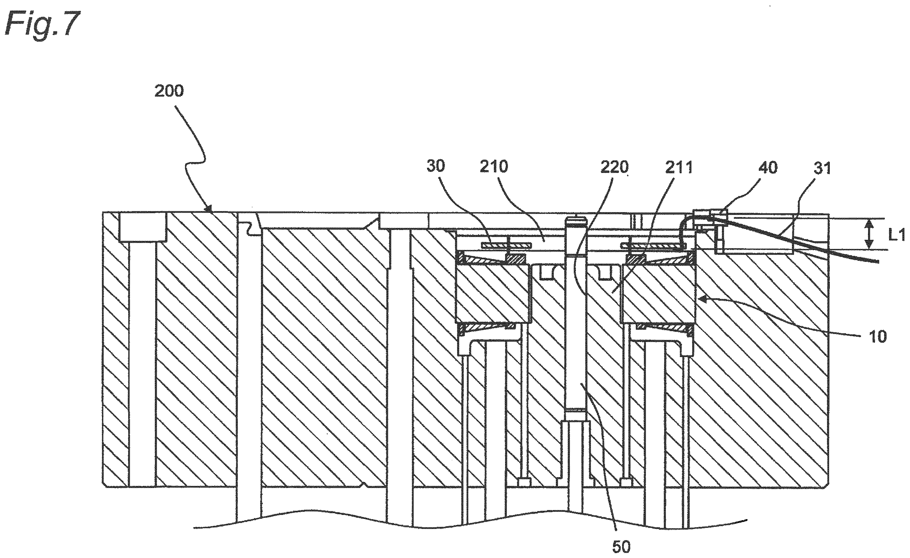

Next, as shown in Fig. 7, the stator 10 and the printed circuit board 30 are accommodated within the cavity 210 of the lower metal mold 200. In addition, the lead bush 40 is arranged at a predetermined position of the lower metal mold 200 so as to be displaced axially upward by a distance L1 with respect to the plane along the printed circuit board 30. In Fig. 7, the reference number 50 denotes a shaft portion, 220 denotes an insertion hole, and 211 denotes a cylindrical portion.

Here, above the stator 10 within the cavity 210 of the lower metal mold 200, the printed circuit board 30 connected to the stator 10 via the lead-out wires 14 (shown in Figs. 3 and 4) of each coil 13 is arranged. One end of the leads 31 is connected to the printed circuit board 30, and the other end side of the leads 31 is drawn out to the outer side of the mold resin portion 20 via the lead bush 40.

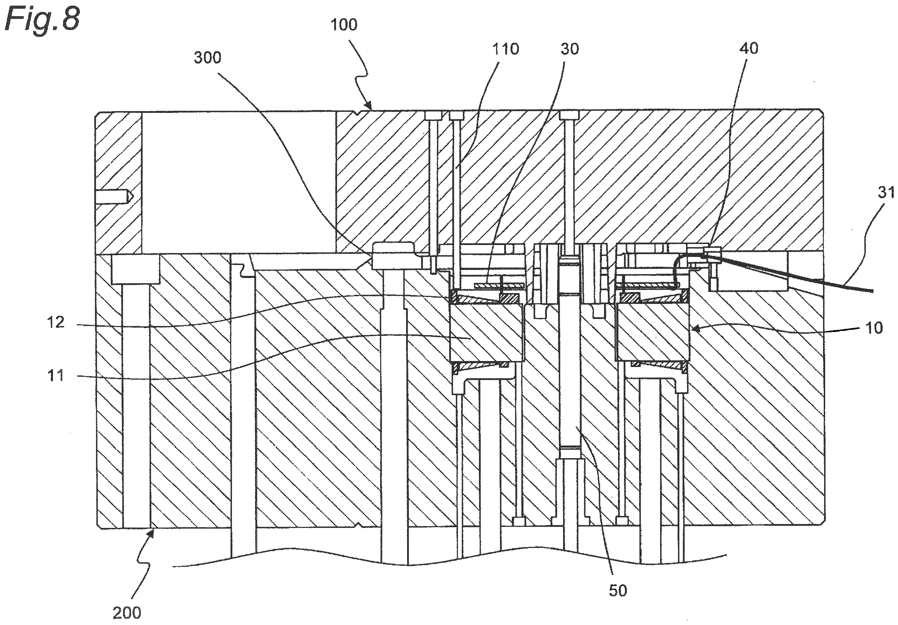

Next, as shown in Fig. 8, the upper metal mold 100 is joined to the lower metal mold 200 . At this time, the insulator holding pins 110 annularly arranged on an radially outer side of the printed circuit board 30 press the insulator 12 of the stator 10 toward the stator core 11.

Next, as shown in Fig. 9, in a state in which the stator 10 is accommodated within the cavity 210 of the lower metal mold 200 and the insulator 12 is pressed by the insulator holding pins 110, a mold resin is injected into the metal molds (100 and 200) from the resin injection port 300 above the printed circuit board 30. The mold resin portion 20 for covering the stator 10 is molded while pressing the printed circuit board 30 toward the stator core 11 with the mold resin being injected. In Fig. 9, the same components as those in Fig. 8 are denoted by the same reference numbers.

Next, the insulator holding pins 110 are removed simultaneously with the upper metal mold 100 moved upward, and the stator 10 covered with the mold resin portion 20 is pushed out with ejector pins 230 (shown in Fig. 6) and taken out from an inside of the metal molds (100 and 200).

According to the method for manufacturing the motor of the second embodiment, it is possible to manufacture a motor that can prevent malfunctions due to water infiltration.

Applying the motor of the present invention as a motor for driving an indoor fan and an outdoor fan of an air conditioner allows an air conditioner capable of obtaining high reliability for a long period of time to be achieved.

In the first and second embodiments, the motor in which the printed circuit board 30 is arranged above the stator 10 within the mold resin portion 20 is described, but the arrangement of the printed circuit board and the stator within the mold resin portion 20 may be turned upside down.

It should be noted that in the first and second embodiments, the path of the lead 31 from the lead bush 40 to the connection portion of the circuit formed on the printed circuit board 30 is provided along a plane including the center line of the shaft portion 50, but a lead bush may be arranged to be displaced in a circumferential direction of a stator with respect to a connection portion of a printed circuit board. Lead wires (wiring lines) is connected to the connection portion. In this case, since the infiltration path from the lead bush to the printed circuit board within a mold resin portion is lengthened, water infiltration is suppressed, and water hardly infiltrates into the interface between the lead bush and the mold resin and the interface between the mold resin and the lead wires, so that malfunctions due to water infiltration can be reliably prevented.

### [Third Embodiment]

In the first and second embodiments, an outer rotor type motor is described, but the motor according to a third embodiment of the present invention is of an inner rotor type. In the inner rotor type, a rotor is arranged so that the rotor faces an inner periphery of an annular stator.

The inner rotor type motor of the third embodiment also has the same effects as the motor of the first and second embodiments.

### [Fourth Embodiment]

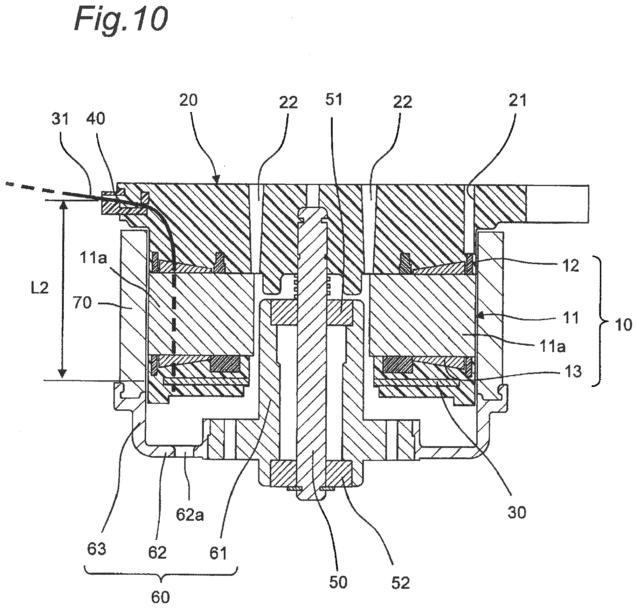

Fig. 10 shows a longitudinal sectional view of a motor according to a fourth embodiment of the present invention. This motor of the fourth embodiment has the same configuration as the motor of the first embodiment except for a mold resin portion 420 and a printed circuit board 430, and the same components are denoted by the same reference numbers.

As shown in Fig. 10, the motor according to the fourth embodiment includes a stator 10, a mold resin portion 420, a printed circuit board 430, a lead bush 40, a shaft portion 50, a rotor attachment portion 60, and a rotor 70.

The printed circuit board 430 is arranged below the stator 10 within the mold resin portion 420 (on the rotor attachment portion 60 side of the stator core 11) and is arranged so as to be perpendicular to an axial direction of motor. Lead 31, one end of which is connected to the printed circuit board 430, is drawn out from an inner side of the mold resin portion 420 to an outer side of the mold resin portion 420 via the lead bush 40.

The mold resin portion 420 covers the stator 10, the printed circuit board 430, a part of the lead 31, a part of the lead bush 40, and an upper portion of the shaft portion 50 with a mold resin.

In addition, the upper portion of the shaft portion 50 is fixed to the mold resin portion 420. Bearings 51 and 52 are attached to this shaft portion 50 at an interval in the axial direction. A bearing housing 61 is rotatably attached to the shaft portion 50 via the bearings 51 and 52. In addition, a flange 62 is provided on an underside of the bearing housing 61. A cylindrical portion 63 extends upward from an outer peripheral side of the flange 62. The bearing housing 61, the flange 62, and the cylindrical portion 63 constitute the rotor attachment portion 60.

A cylindrical rotor 70 is attached to an upper end of the cylindrical portion 63 of the rotor attachment portion 60 so as to surround an outer periphery of the stator 10. The shaft portion 50 and the bearings 51 and 52 constitute a support portion for rotatably supporting the rotor 70 via the rotor attachment portion 60.

In Fig. 10, the lead bush 40 is arranged to be displaced axially upward by a distance L2 with respect to a plane along the printed circuit board 430.

According to the motor having the above configuration, arranging the printed circuit board 430 on the rotor attachment portion 60 side of the stator core 11 and arranging the lead bush 40 on the side opposite to the rotor attachment portion 60 side of the stator core 11 allows the distance of the leads 31 from the printed circuit board 430 to the lead bush 40 within the mold resin portion 420 to be further lengthened across the stator core 11 as compared with the distance of the first embodiment. Thus, even when water infiltrates into the interface between the lead bush 40 and the mold resin portion 420 and the interface between the mold resin portion 420 and the leads 31 in the mold resin portion 420, the infiltration path from the lead bush 40 to the printed circuit board 430 is further lengthened, so that the infiltration of water is effectively suppressed, and the probability that a malfunction such as a short circuit occurs in the printed circuit board 430 for connecting the coils 13 of the stator 10 can be greatly reduced. Therefore, malfunctions due to water infiltration can be prevented and high reliability can be obtained for a long period of time.

The motor of the fourth embodiment has the same effects as the motor of the first embodiment.

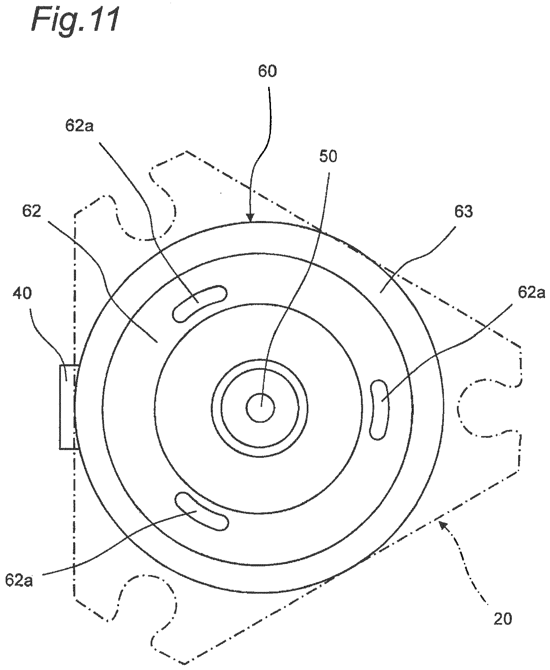

Fig. 11 shows a top view of the stator 10 side of the motor. In Fig. 11, the same components as those in Fig. 10 are denoted by the same reference numbers.

In the first to fourth embodiments, the motor in which the printed circuit board 30 or 430 is arranged in the mold resin portion 20 or 420 so as to be orthogonal to the axial direction is described, but the printed circuit board may be arranged within the mold resin portion so as to be inclined with respect to the axial direction, or the printed circuit board may be arranged within the mold resin portion so as to be parallel to the axial direction. In this case, the lead bush only has to be arranged so as to be displaced in any one of the axial directions with respect to the connection point between the printed circuit board and the lead wire.

The specific embodiments of the present invention have been described, but the present invention is not limited to the first to fourth embodiments, and various modifications can be made within the scope of the present invention.

The present invention is particularly suitable for a configuration using a ferrite bond for a rotor of an outer rotor type motor. For example, as in the motor shown in Fig. 1 of the first embodiment, the rotor 70 includes a central portion facing the stator core 11 and overhang portions extending in the axial direction above and below the central portion thereof, so that the distance in the axial direction between the printed circuit board 30 and the lead bush 40 can be secured with the overhang portion on the upper side of the rotor 70, and it is convenient to apply this invention.

The specific embodiments of the present invention have been described, but the present invention is not limited to the first and second embodiments, and various modifications can be made within the scope of the present invention.

### REFERENCE SIGNS LIST

10: stator
11: stator core
12: insulator
13: coil
14: lead-out wire
20, 420: mold resin portion
21: insulator holding pin hole
22: vent hole
30, 430: printed circuit board
31: lead wire
40: lead bush
50: shaft portion
51, 52: bearings
60: rotor attachment portion
61: bearing housing
62: flange
63: cylindrical portion
70: rotor
100: upper metal mold
110: insulator holding pin
120: shaft portion holding pin
130: vent hole protrusion
200: lower metal mold
210: cavity
211: cylindrical portion
220: insertion hole
300: resin injection port

## Claims

1. A motor comprising:
a stator (10) including a stator core (11) and coils (13) wound around the stator core (11) with an insulator (12) interposed between the coil (13) and the stator core (11);
a mold resin portion (20, 420) configured to cover the stator (10);
a printed circuit board (30, 430) arranged within the mold resin portion (20, 420); and
a lead bush (40) configured to bundle wiring lines (31) one end of which is connected to the printed circuit board (30, 430) to draw the wiring lines (31) outside,
wherein the lead bush (40) is arranged to be displaced in any one of opposite axial directions of the motor with respect to the printed circuit board (30, 430).

2. The motor according to claim 1, further comprising:
a cylindrical rotor (70) arranged so as to surround a radially outer side of the stator (10);
a rotor attachment portion (60) provided at one end of the rotor (70); and
a support portion (50, 51) configured to rotatably support the rotor (70) via the rotor attachment portion (60),
wherein the printed circuit board (430) is arranged on the rotor attachment portion (60) side of the stator core (11), and
the lead bush (40) is arranged on a side opposite to the rotor attachment portion (60) side of the stator core (11).

3. The motor according to claim 1 or 2, wherein the lead bush (40) is arranged to be displaced downward in the axial direction with respect to a plane along the printed circuit board (30, 430) .

4. The motor according to any one of claims 1 to 3, wherein the lead bush (40) is arranged to be displaced in a circumferential direction with respect to a connection portion of the printed circuit board (30, 430) to which the wiring lines (31) are connected.
